# EUROPEAN PATENT APPLICATION

(11) **EP 1 335 511 A2**
(43) Date of publication of application: **13.08.2003**
(21) Application number: 03000195.2
(22) Date of filing: 07.01.2003
(51) Int. Cl.: H04H 1/00, H04N 5/44, H04L 29/06

(54) **Apparatus for receiving broadcast programmes comprising link address information and information access system using the link address information**

(30) Priority: 09.01.2002 JP 2002001990
(71) Applicant: Matsushita Electric Industrial Co., Ltd., Kadoma-shi, Osaka-fu 571-8501 (JP)
(72) Inventor: Yamamoto,Masayuki, Kadoma-shi, Osaka-fu 571-0064 (JP); Ura, Seiji, Osaka-shi, Osaka-fu 533-0006 (JP); Fukushima, Hideaki, Kashiba-shi, Nara-ken 639-0265 (JP); Shin, Hidehiko, Moriguchi-shi, Osaka-fu 570-0032 (JP)
(74) Representative: Gassner, Wolfgang, Dr.

(57) **Abstract**

An address storage section (12) stores addresses and their attribute data included in received broadcast. An address extracting section (14) extracts one or more addresses to be transmitted from the received addresses based on the state of a broadcast receiving apparatus (210) managed by a state managing section (13) and received attribute data. For transmission of the extracted addresses, update information associated with the addresses is transmitted from a transmitting/receiving section (16) to a transmitting/receiving section (26). An information terminal (220) immediately displays the addresses extracted by the broadcast receiving apparatus (210) on a screen. In accordance with an instruction from a user, the information terminal (220) retrieves information from a Web server (42). An address editing section (27) edits any of the addresses and their attribute data stored in the address storage section (12).

## Description

### BACKGROUND OF THE INVENTION

### Field of the Invention

The present invention relates to an information access system including a broadcast receiving apparatus and an information terminal. More specifically, the present invention relates to an information access system in which a broadcast receiving apparatus receives an address to be used in an information terminal, and provides the received address to the information terminal, and the information terminal uses the provided address to access information.

### Description of the Background Art

In recent years, many information terminals, such as cellular phones and PHS (Personal Handyphone System), have incorporated a Web browsing function. People can use such an information terminal to access the Internet for obtaining information from a Web site connected to the Internet and viewing the obtained information irrespectively of time and place.

Also, in addition to a function of accessing the Internet, the information terminals have a function of communicating with devices of other types, such as home appliances typified by televisions, via various known schemes exemplarily described below.

As a first scheme, Japanese Patent Laid-Open Publication No. 10-254806 (1998-254806) discloses a scheme of controlling various devices, such as home appliances and office devices, by using a Web browser. In the first scheme, a device to be controlled is provided with a communications means compliant with HTTP (HyperText Transfer Protocol). The communications means provides a Web page concerning the device to the Web browser placed outside the device. Also, by downloading a new package file into the device, information about the construction of the device is changed, thereby updating the Web page concerning the device.

As a second scheme, Japanese Patent Laid-Open Publication No. 2001-45447 discloses a scheme in which a digital broadcast receiver transmits received information, such as program identification information, to an operation device serving as a remote controller, and the operation device uses the received information to access a wide-area network.

With a combination of the above first and second schemes, it is possible to achieve an information access system having a broadcast receiving apparatus and an information terminal, wherein the broadcast receiving apparatus receives an address to be used in the information terminal and provides the received address to the information terminal, and the information terminal uses the received address to access information. Here, the address to be used in the information terminal is a URL (Universal Resource Locator), for example.

A specific example of the above system is an information access system having a digital television and a cellular phone. When a conventional television is used, for the purpose of accessing a Web site by using a URL displayed on a screen of a conventional television during program broadcasting, a user has to write down the displayed URL on paper, for example, and then enter the URL, manually character by character, into a personal computer or a cellular phone capable of Web browsing. In order to eliminate the inconvenience of such an input operation, the following exemplary measure can be taken: a television broadcast signal embedded with a URL is received by the digital television, and the URL embedded in the signal is transmitted from the digital television to the cellular phone via a communications means provided therebetween. With this, the user of the cellular phone can view program-associated information stored in a Web site without entering the URL.

Still further, as a third scheme, Japanese Patent Laid-Open Publication No. 11-27312 (1999-27312) discloses an information viewing scheme for small-sized terminals, such as cellular phones. In the third scheme, in view of improvement in data transfer rate, necessary information is downloaded in advance into a large-sized information terminal, and is then forwarded to a small-sized terminal when appropriate for viewing.

However, the above-described information access system in combination of the first and second schemes has the following problems. In the above-mentioned information access system having a digital television and a cellular phone, for example, if a broadcast station transmits URLs embedded in television broadcast signals one after another to the digital television, and the digital television passes the received URLs as they are to the cellular phone, an overflow of the URLs occurs at the cellular phone. In more detail, if a large number of URLs are embedded in television broadcast signals for transmission to the cellular phone, the user will find it very hard to look for a desired URL in the received URLs for selection. Moreover, the storage capacity of the cellular phone has a certain limit. Therefore, a desired URL may be overwritten with a URL transmitted thereafter, and be lost from the cellular phone.

Furthermore, the above system cannot manage expiration dates of temporary Web sites . Therefore, a Web site accessed with the use of the received URL may no longer be valuable to the user. Still further, URLs are provided from the digital television to the cellular phone in a priority order predetermined in the system, irrespectively of user's intentions. Therefore, the user may find it very difficult to look for a valuable URL in a large number of URLs.

Still further, the above third scheme merely makes it possible to obtain information from a Web site previously set in the large-sized information terminal. The third scheme does not encompass a mechanism for managing expiration dates of the obtained information, or a mechanism for screening a plurality of pieces of received information based on their attributes. Therefore, with the third scheme, it is not possible to screen the received pieces of information based on their attributes and then provide the screened information to the user.

### SUMMARY OF THE INVENTION

Therefore, an object of the present invention is to provide an information access system in which a broadcast receiving apparatus receives an address to be used in an information terminal and provides the received address to the information terminal, thereby enabling a user to access desired information by using the information terminal with just a few number of operations.

The present invention has the following features to attain the object mentioned above.

A first aspect of the present invention is directed to an information access system having a broadcast receiving apparatus and an information terminal that are communicably connected with each other. The broadcast receiving apparatus includes: a broadcast receiving section for receiving a broadcast including one or more addresses to be used in the information terminal and attribute information of the addresses; an address storage section for storing the addresses and the attribute information included in the broadcast received by the broadcast receiving section; a state managing section for managing a state of the broadcast receiving apparatus; an address extracting section for extracting one or more addresses to be used from the addresses stored in the address storage section based on the state managed by state managing section and the attribute information stored in the address storage section; and an address transmitting section for transmitting the addresses extracted by the address extracting section to the information terminal. The information terminal includes: an address receiving section for receiving the addresses transmitted from the broadcast receiving apparatus; an address displaying section for displaying the addresses received by the address receiving section on a screen; an address selecting section for selecting an address from the addresses displayed by the address displaying section; an information retrieving section for retrieving information using the address selected by the address selecting section; and an information displaying section for displaying the information retrieved by the information retrieving section on the screen.

As described above, in the first aspect, in the information access system where the broadcast receiving apparatus receives addresses to be used in the information terminal for provision thereto, the broadcast receiving apparatus extracts part of the broadcasted addresses for transmission to the information terminal. Thus, the broadcast receiving apparatus can extract only the addresses required for the information terminal for transmission. With this, it is possible to prevent the many addresses included in broadcast data from being provided as they are to the information terminal. This makes it easy to perform address selection and display at the information terminal, thereby enabling a user to access desired information by using the information terminal with just a few number of operations.

According to a second aspect based on the first aspect, the broadcast receiving apparatus further includes an address editing section for editing any of the addresses and the attribute information stored in the address storage section.

As described above, in the second aspect, the user can use the broadcast receiving apparatus to change an address extracting condition at the broadcast receiving apparatus, thereby freely controlling the contents of the addresses to be provided to the information terminal or a scheme of providing the addresses.

According to a third aspect based on the first aspect, the information terminal further includes a terminal-side address editing section for editing any of the addresses and the attribute information stored in the address storage section by using a function of communicating with the broadcast receiving apparatus.

As described above, in the third aspect, the user can use the information terminal to remotely change an address extracting condition at the broadcast receiving apparatus, thereby freely controlling the contents of the addresses to be provided to the information terminal or a scheme of providing the addresses.

According to a fourth aspect based on the first aspect, the address transmitting section stores a transmission history indicative of the addresses that have been transmitted, finds update information based on the transmission history and the addresses extracted by the address extracting section, and transmits the found update information to the information terminal. The address receiving section stores a reception history indicative of the addresses that have been received, and finds the addresses transmitted from the broadcast receiving apparatus based on the reception history and the update information transmitted from the broadcast receiving apparatus.

As described above, in the fourth aspect, the broadcast receiving apparatus transmits update information associated with the addresses only when the addresses to be transmitted this time are different from those already transmitted. Therefore, when the addresses to be transmitted are not changed from those already transmitted, no data is transmitted. Thus, communications efficiency can be improved.

According to a fifth aspect based on the first aspect, the broadcast receiving section receives a television broadcast including one or more addresses to be used in the information terminal and attribute information of the addresses.

As described above, in the fifth aspect, the broadcast receiving apparatus transmits part of the television-broadcasted addresses for transmission to the information terminal. Also in this case, the broadcast receiving apparatus extracts only the addresses required for the information terminal for transmission, thereby enabling a user to access desired information by using the information terminal with just a few number of operations.

According to a sixth aspect based on the fifth aspect, the addresses included in the television broadcast received in the broadcast receiving section are addresses for accessing information associated with the television broadcast.

As described above, in the sixth aspect, even when the address for accessing information associated with the television broadcast is included in the television broadcast for transmission, the user can access desired information by using the information terminal with just a few number of operations.

According to a seventh aspect based on the first aspect, the address displaying section immediately displays the addresses received by the address receiving section.

As described above, in the seventh aspect, even when addresses are transmitted one after another from the broadcast receiving apparatus to the information terminal, the user can access information by using the address received the latest.

According to an eighth aspect based on the first aspect, the broadcast receiving apparatus and the information terminal are communicably connected to each other via a short-distance wireless communications.

As described above, in the eighth aspect, communications between the broadcast receiving apparatus and the information terminal can be easily carried out.

A ninth aspect of the present invention is directed to a broadcast receiving apparatus that provides an address to an information terminal communicably connected thereto. The broadcast receiving apparatus includes: a broadcast receiving section for receiving a broadcast including one or more addresses to be used in the information terminal and attribute information of the addresses; an address storage section for storing the addresses and the attribute information included in the broadcast received by the broadcast receiving section; a state managing section for managing a state of the broadcast receiving apparatus; an address extracting section for extracting one or more addresses to be transmitted from the addresses stored in the address storage section based on the state of the state managing section and the attribute information stored in the address storage section; and an address transmitting section for transmitting the addresses extracted by the address extracting section to the information terminal.

As described above, in the ninth aspect, it is possible to provide a broadcast receiving apparatus included in the information access system according to the first aspect.

A tenth aspect of the present invention is directed to an information terminal that receives an address from a broadcast receiving apparatus which is communicably connected thereto and which stores one or more addresses and attribute information of the addresses included in a received broadcast. The information terminal includes: an address receiving section for receiving one or more addresses transmitted from the broadcast receiving apparatus; an address displaying section for displaying the addresses received by the address receiving section on a screen; an address selecting section for selecting an address from the addresses displayed by the address displaying section; an information retrieving section for retrieving information using the address selected by the address selecting section; an information displaying section for displaying the information retrieved by the information retrieving section on the screen; and a terminal-side address editing section for editing any of the addresses and the attribute information stored in the broadcast receiving apparatus using a function of communicating with the broadcast receiving apparatus, wherein the broadcast receiving apparatus transmits the addresses extracted from the stored addresses based on a state of the broadcast receiving apparatus and the attribute information.

As described above, in the tenth aspect, it is possible to provide an information terminal included in the information access system according to the third aspect.

An eleventh aspect of the present invention is directed to an information accessing method using a broadcast receiving apparatus and an information terminal that are communicably connected with each other. The method includes steps performed by the broadcast receiving apparatus of: receiving a broadcast including one or more addresses to be used in the information terminal and attribute information of the addresses; storing the addresses and the attribute information included in the received broadcast; managing a state of the broadcast receiving apparatus; extracting one or more addresses from the stored address based on the managed state and the stored attribute information; and transmitting the extracted addresses to the information terminal, and steps performed by the information terminal of: receiving the addresses transmitted from the broadcast receiving apparatus; displaying the received addresses on a screen; selecting an address from the displayed addresses; retrieving information using the selected address; and displaying the retrieved information on the screen.

As described above, in the eleventh aspect, when the broadcast receiving apparatus receives addresses to be used in the information terminal for provision thereto, the broadcast receiving apparatus extracts part of the broadcasted addresses for transmission to the information terminal. Thus, the broadcast receiving apparatus can extract only the addresses required for the information terminal for transmission. With this, it is possible to prevent the many addresses included in broadcast data from being provided as they are to the information terminal. This makes it easy to perform address selection and display at the information terminal, thereby enabling a user to access desired information by using the information terminal with just a few number of operations.

A twelfth aspect of the present invention is directed to a program to be executed by a broadcast receiving apparatus that provides an address to an information terminal communicably connected thereto. The program includes the steps of: receiving a broadcast including one or more addresses to be used in the information terminal and attribute information of the addresses; storing the addresses and the attribute information included in the received broadcast; managing a state of the broadcast receiving apparatus; extracting one or more addresses from the stored addresses based on the managed state and the stored attribute information; and transmitting the extracted addresses to the information terminal.

As described above, in the twelfth aspect, it is possible to provide a program executed by the broadcast receiving apparatus according to the ninth aspect.

A thirteenth aspect of the present invention is directed to a program to be executed by an information terminal that receives addresses from a broadcast receiving apparatus which is communicably connected thereto and which stores one or more addresses and attribute information of the addresses included in a received broadcast. The program includes the steps of: receiving one or more addresses transmitted from the broadcast receiving apparatus; displaying the received addresses on a screen; selecting an address from the displayed addresses; retrieving information using the selected address; displaying the retrieved information on the screen; and editing any the addresses and the attribute information stored in the broadcast receiving apparatus by using a function of communicating with the broadcast receiving apparatus, wherein the broadcast receiving apparatus transmits the addresses extracted from the stored addresses based on a state of the broadcast receiving apparatus and the attribute information. As described above, in the thirteenth aspect, it is possible to provide a program executed by the information terminal according to the tenth aspect.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is an illustration showing the entire configuration of a system including an information access system according to any of first and second embodiments of the present invention;
FIG. 2 is a block diagram illustrating the configuration of the information address system according to the first embodiment of the present invention;
FIGS. 3A and 3B are illustrations each showing an example of addresses to be used in the information access system according to the first and second embodiments of the present invention;
FIG. 4 is an illustration showing an example of data stored in an address storage unit of the information access system according to the first and second embodiments of the present invention;
FIG. 5 is a flowchart showing a procedure performed by a broadcast receiving apparatus in the information access system according to the first embodiment of the present invention;
FIG. 6 is a flowchart showing a procedure performed by an information terminal in the information access system according to the first embodiment of the present invention;
FIG. 7 is a block diagram showing the configuration of the information access system according to the second embodiment of the present invention;
FIG. 8 is an illustration showing an example of update information for use in the information access system according to the second embodiment of the present invention;
FIG. 9 is a flowchart showing a procedure performed by a broadcast receiving apparatus in the information access system according to the second embodiment of the present invention;
FIG. 10 is a flowchart showing a procedure performed by an information terminal in the information access system according to the second embodiment of the present invention;
FIG. 11 is a sequence chart showing how data is transmitted and received in the information access system according to the second embodiment of the present invention;
FIG. 12 is a flowchart showing a process of editing data stored in an address storage section of the information access system according to the second embodiment of the present invention; and
FIG. 13 is a block diagram illustrating the configuration of an information access system according to an exemplary modification of the second embodiment of the present invention.

### DESCRIPTION OF THE PREFERRED EMBODIMENTS

### (System configuration)

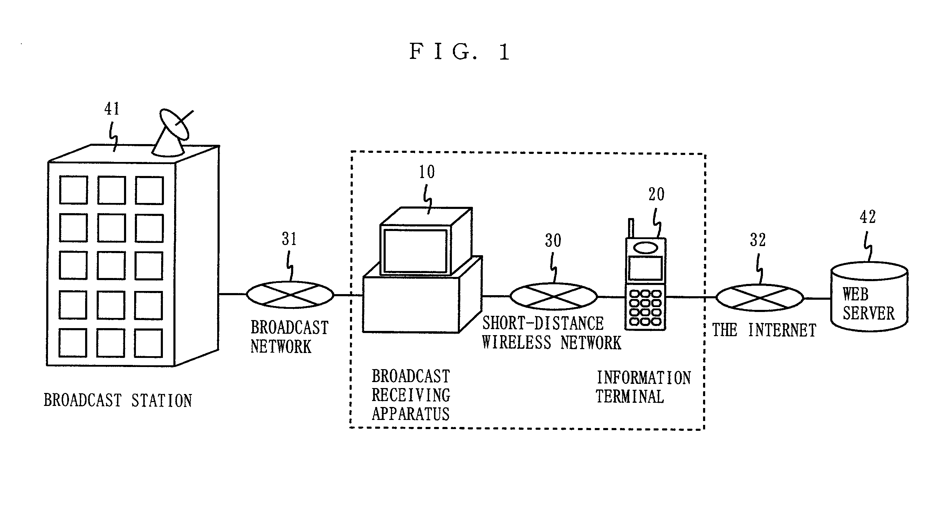

FIG. 1 is an illustration showing the entire configuration of a system including an information access system according to any of first and second embodiments of the present invention. The system illustrated in FIG. 1 includes a broadcast station 41, a broadcast receiving apparatus 10, an information terminal 20, a Web server 42, a broadcast network 31, a short-distance wireless network 30, and the Internet 32. Of these components, a portion including the broadcast receiving apparatus 10 and the information terminal 20 (a portion surrounded by a dotted line) corresponds to the information access system according to any of the embodiments of the present invention.

As illustrated in FIG. 1, the broadcast receiving apparatus 10 and the information terminal 20 are communicably connected to each other via the short-distance wireless network 30. For short-distance wireless communications, PHS communications between cellular phones and a base station, wireless LAN (Local Area Network), or Bluetooth (R) are used, for example.

The broadcast receiving apparatus 10 is a television placed at home, for example. The broadcast receiving apparatus 10 is connected to the broadcast station 41 via the broadcast network 31. The broadcast station 41 transmits, to the broadcast receiving apparatus 10, video and audio broadcast data including addresses to be used for the information terminal 20 that accesses information and attribute data of these addresses. Note herein that an address is data indicative of a location of information on a network, and is typified by a URL and an IP (Internet Protocol) address. The broadcast receiving apparatus 10 receives the addresses and their attribute data transmitted from the broadcast station 41, and then uses a predetermined scheme to extract one or more addresses to be transmitted. The broadcast receiving apparatus 10 then uses the short-distance wireless network 30 to transmit the extracted addresses to the information terminal 20.

The information terminal 20 is a cellular phone having a Web browsing function, for example. The information terminal 20 is connected to the Web server 42 via the Internet 32. The information terminal 20 displays on a screen the addresses received from the broadcast receiving apparatus 10, such as URLs to be used for retrieving information from the Web server 42. A user of the information terminal 20 uses an input key, for example, to select an address from the addresses displayed on the screen. The information terminal 20 accesses information by using the address selected by the user. By way of example only, when the addresses are URLs, the information terminal 20 accesses the Web server 42 by using the URL selected by the user to retrieve information from the Web server 42. The retrieved information is displayed on the screen of the information terminal 20.

The system configuration illustrated in FIG. 1 is merely an example. The broadcast receiving apparatus 10 is not restricted to a television, and can be any broadcast receiving device typified by a radio receiver, or any data receiving device typified by a personal computer, as long as the broadcast receiving apparatus 10 can communicate with the information terminal 20. The information terminal 20 is also not restricted to a cellular phone, and can be any portable information device, such as a PDA (Personal Digital Assistance) or PHS incorporating a wireless communications function.

A network connecting the broadcast station 41 and the broadcast receiving apparatus 10 is not restricted to the broadcast network 31, and can be a CS (Communication Satellite) broadcast network, a wired wide-area communications network typified by the Internet, or a dedicated communications network such as an intranet. Also, a network connecting the broadcast receiving apparatus 10 and the information terminal 20 is not restricted to the short-distance wireless network 30 such as a PHS network, a wireless LAN, or Bluetooth (R), and can be an infrared network complying with IrDA (InfraRed Data Association) Control or a wired network. Furthermore, a network connecting the information terminal 20 and the Web server 42 is not restricted to the Internet 32, and can be an intranet using a dedicated line or a wireless network.

As described above, the information access system illustrated in FIG. 1 has a feature such that the broadcast receiving apparatus 10 receives addresses and their attribute data, extracts addresses from the received addresses in a predetermined scheme, and then transmits the extracted addresses to the information terminal 20. In the following embodiments, details of the broadcast receiving apparatus 10 and the information terminal 20 are described.

### (First embodiment)

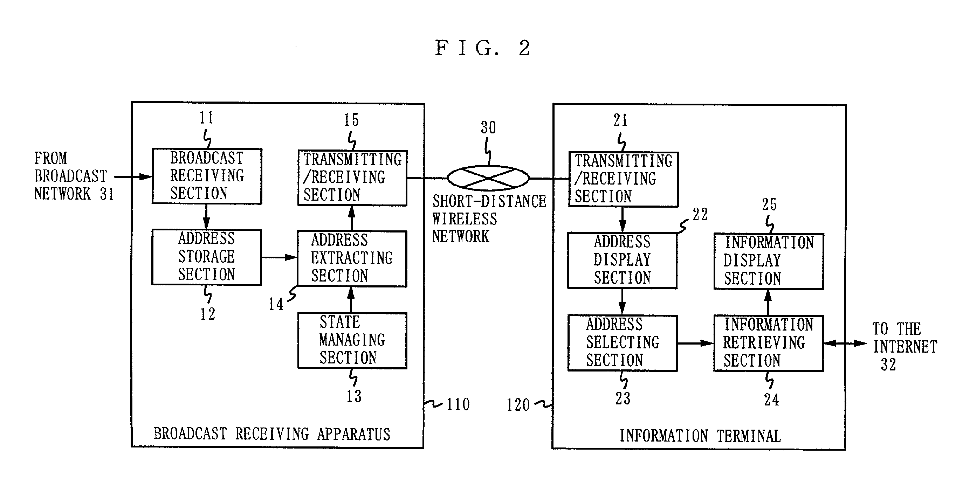

FIG. 2 is a block diagram illustrating the configuration of the information access system according to the first embodiment of the present invention. A broadcast receiving apparatus 110 and an information terminal 120 illustrated in FIG. 2 correspond to the broadcast receiving apparatus 10 and the information terminal 20 illustrated in FIG. 1, respectively. The broadcast receiving apparatus 110 includes a broadcast receiving section 11, an address storage section 12, a state managing section 13, an address extracting section 14, and a transmitting/receiving section 15. The information terminal 120 includes a transmitting/receiving section 21, an address display section 22, an address selecting section 23, an information retrieving section 24, and an information display section 25.

Each component of the broadcast receiving apparatus 110 operates as follows. The broadcast receiving section 11 receives video and audio broadcast data from the broadcast station 41 via the broadcast network 31. The received video and audio broadcast data is converted into a predetermined format, and is then output on a screen or from a loudspeaker. From the broadcast station 41 to the broadcast receiving apparatus 110, addresses and their attribute data included in the video and audio broadcast data are also transmitted. The broadcast receiving section 11 receives these addresses and their attribute data, and forwards them to the address storage section 12.

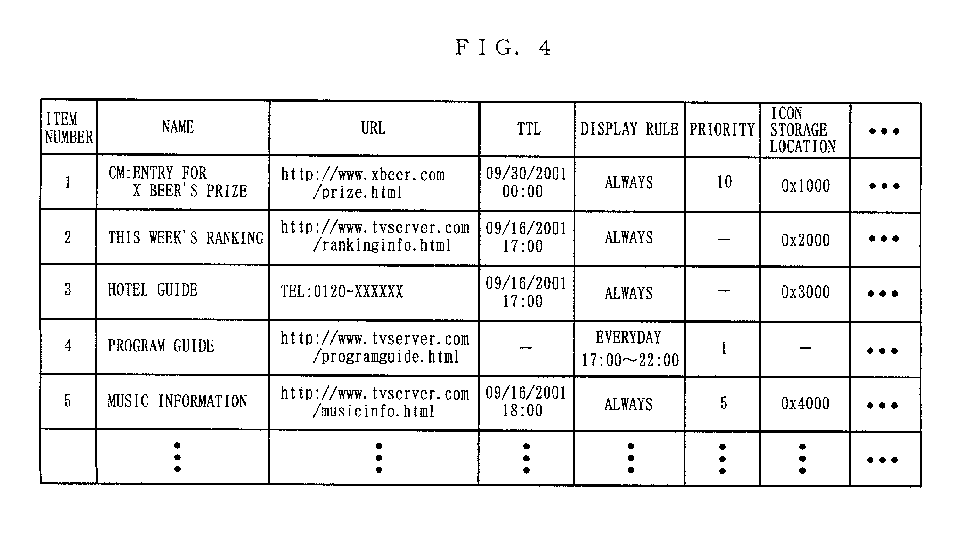

The address storage section 12 stores the addresses and the attribute data output from the broadcast receiving section 11. The addresses are, as described above, addresses to be used when the information terminal 120 accesses information. In more detail, the addresses are descriptors each designating one or more pieces of information from among a group of information accessible from the information terminal 120. The addresses are, for example, URLs of information stored in the Web server 42 connected to the Internet 32, or pathnames each designating a file stored in a file storage. Also, the attribute data of the addresses include expiration date including time and day (TTL: Time To Live), display rule, and priority, for example. The details of the attribute data are described further below with reference to FIG. 4.

The state managing section 13 stores the state of the broadcast receiving apparatus 110 for management. The state managed by the state managing section 13 includes various states of the broadcast receiving apparatus 110, such as the current time and day, television channel number, sound volume, and whether or not the apparatus is in standby mode (mode in which main power is ON but no screen is displayed).

The address extracting section 14 extracts one or more addresses to be transmitted to the information terminal 120 (such addresses are hereinafter referred to as target addresses) from the addresses stored in the address storage section 12. This extraction is made based on the attribute data stored in the address storage section 12 and the state managed by the state managing section 13.

For example, the address extracting section 14 first compares the expiration date of an address included in the attribute data with the current date included in the state of the apparatus. If the current date is after the expiration date, the address extracting section 14 determines that the address is invalid, and excludes the address from the target addresses. Also, when the display rule included in the attribute data indicates "Mondays, 20:00-21:00", the address extracting section 14 compares the time and day of the week specified by the display rule with the current date included in the state of the apparatus. Only when the current date matches the time and day of the week specified by the display rule, does the address extracting section 14 extract the address as the target address. Furthermore, when the display rule indicates "Channel 1 on TV", the address extracting section 14 compares the channel specified by the display rule with the current channel number included in the state of apparatus. Only when the current channel is Channel 1, does the address extracting section 14 extract the received address as the target address. The addresses extracted by address extracting section 14 are supplied to the transmitting/receiving section 15.

The transmitting/receiving section 15 uses the short-distance wireless network 30 to transmit and receive data with the transmitting/receiving section 21 of the information terminal 120. Specifically, the transmitting/receiving section 15 transmits the target addresses supplied by the address extracting section 14 to the information terminal 120. Note that a device to or from which the transmitting/receiving section 15 transmits or receives data is not restricted to the information terminal 120, and can be any device as long as the device is connected to the short-distance wireless network 30 and has capabilities equivalent to those of the information terminal 120.

Each component of the information terminal 120 operates as follows. The transmitting/receiving section 21 uses the short-distance wireless network 30 to transmit and receive data with the transmitting/receiving section 15 of the broadcast receiving apparatus 110. Specifically, the transmitting/receiving section 21 receives the addresses transmitted from the broadcast receiving apparatus 110, and outputs these addresses to the address display section 22. Note that a device to or from which the transmitting/receiving section 21 transmits or receives data is not restricted to the broadcast receiving apparatus 110, and can be any device as long as the device is connected to the short-distance wireless network 30 and has capabilities equivalent to those of the broadcast receiving apparatus 110.

The address display section 22 displays the addresses output from the transmitting/receiving section 21 on a screen of the information terminal 120. The addresses are displayed by using a character string or an icon, for example, so that the user can specify each address. The address display section 22 can display icons representing these addresses by using icon data previously held in the information terminal 120. Alternatively, when icon data is provided to the information terminal 120 in a manner similar to that of the addresses, the address display section 22 can use the icon data transmitted from the broadcast station 41 to display icons representing the addresses.

The address selecting section 23 selects, upon receipt of an instruction from the user, one address from among the addresses displayed on the address display section 22. By way of example only, the information terminal 120 displays a cursor together with the information addresses on the screen. The user of the information terminal 120 uses a direction button or a number button to move the cursor to a desired address and then presses an enter button. Alternatively, each address is assigned in advance a specific number, and the user presses a number button corresponding to a desired address. The address selected by the address selecting section 23 is supplied to the information retrieving section 24.

The information retrieving section 24 is connected to the Web server 42 via the Internet 32 for retrieving information by using the address selected by the address selecting section 23. In more detail, the information retrieving section 24 accesses the Web server 42 specified by the address selected by the address selecting section 23 to retrieve specific information from the Web server 42. The information retrieved by the information retrieving section 24 is supplied to the information display section 25.

The information display section 25 displays the information supplied by the information retrieving section 24 (that is, the information selected by the user using the address selecting section 23) on the screen of the information terminal 120.

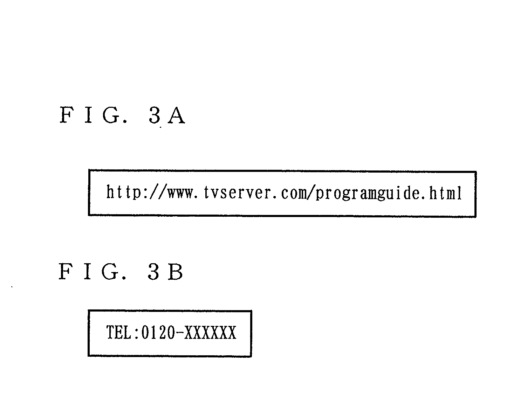

FIGS. 3A and 3B are illustrations each showing an example of the addresses transmitted from the broadcast receiving apparatus 110 to the information terminal 120. An exemplary address illustrated in FIG. 3A is a URL indicative of a location of information stored in the Web server 42 connected to the Internet 32, having a structure such that a location of the Web server 42 on the network is concatenated with a location of the information in the Web server 42. Of the URL, the location on the network can be of any form as long as the location indicates information that can uniquely specify a location of the information on the network, such as an IP address or a name of a computer connected to an intranet. Also, in addition to a character string indicative of the location of information, the address can include a character string indicative of a title of the information or icon data representing a feature of the information. An exemplary address illustrated in FIG. 3B indicates a telephone number, and is used when the information terminal 120 has a telephony function. Note that the telephone number illustrated in FIG. 3B has a structure such that an upper 4-digit number (0120) indicating that a receiver pays a bill is concatenated with a lower 6-digit number (XXXXXX, where X represents a number) for identifying the receiver.

FIG. 4 is an illustration showing an example of the data stored in the address storage section 12. The address storage section 12 stores the addresses and the attribute data supplied by the broadcast receiving section 11 in a table format as illustrated in FIG. 4, for example. Each row of the table corresponds to an address and its attribute data. In the example of FIG. 4, "URL" is the address, while "TTL", "display rule", and "priority" are the attribute data. The "URL" column may include not only URLs but also an address of another format (telephone number, for example). "TTL" indicates an expiration date of the address. "Display rule" indicates a condition for displaying the address on the screen of the information terminal 120. "Priority" indicates a priority level of the address.

"Name" and "icon storage location" are auxiliary information stored together with the address. "Name" indicates a name given to the information specified by the address, and is transmitted from the broadcast station 41 together with the address. "Icon storage location" indicates a memory address on a memory incorporated in the address storage section 12, at which icon data corresponding to the address is stored. The address storage section 12 stores the table illustrated in FIG. 4 in a format such that, for example, the elements contained in the table are aligned in a predetermined order as being delimited with symbols, such as commas. Note that, in the address storage section 12, every element does not have to have a value registered therein, and the attribute data and the auxiliary information may have no value registered therein.

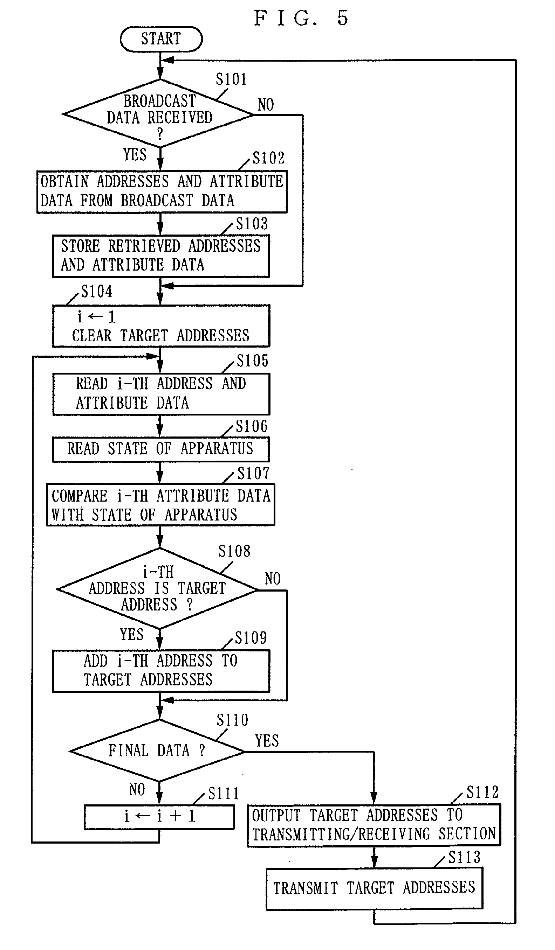

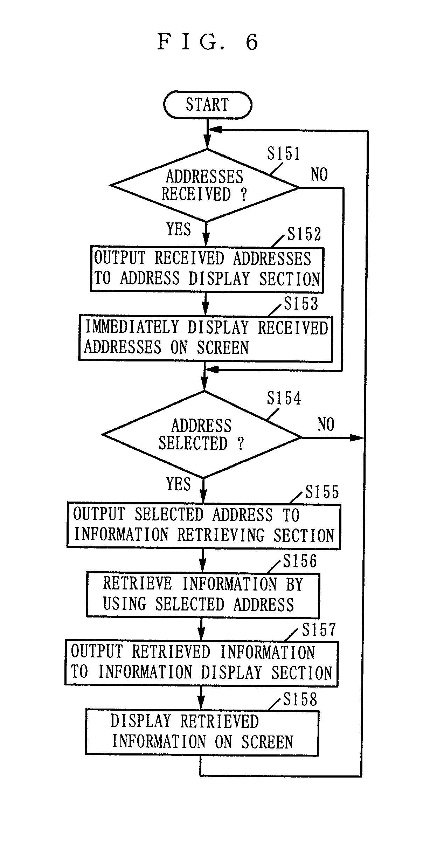

FIG. 5 is a flowchart showing a procedure performed by the broadcast receiving apparatus 110. As illustrated in FIG. 5, the broadcast receiving apparatus 110 repeatedly performs processes of steps S101 through S113. FIG. 6 is a flowchart showing a procedure performed by the information terminal 120. As illustrated in FIG. 6, the information terminal 120 repeatedly performs processes of steps S151 through S158. With reference to FIGS. 5 and 6, the operations of the broadcast receiving apparatus 110 and the information terminal 120 are described below.

As illustrated in FIG. 5, the broadcast receiving apparatus 110 first determines whether broadcast data has been received from the broadcast station 41 via the broadcast network 31 (step S101). If broadcast data has been received, the procedure goes to step S102, and otherwise goes to step S104. If broadcast data has been received, the broadcast receiving section 11 obtains one or more addresses and their attribute data from the received broadcast data for output to the address storage section 12 (step S102). The address storage section 12 stores the addresses and attribute data received from the broadcast receiving section 11 (step S103).

In steps S104 through S112, the address extracting section 14 operates. When the broadcast receiving apparatus 110 reaches step S104, the address storage section 12 stores one or more addresses. The address extracting section 14 uses a variable *i* to designate an address to be processed from among the addresses stored in the address storage section 12. The address extracting section 14 substitutes 1 into the variable *i*, and clears the addresses to be transmitted (step S104). The address extracting section 14 then reads an *i*-th address and its attribute data from the address storage section 12 (step S105), and also reads the state of the apparatus from the state managing section 13 (step S106).

The address extracting section 14 then compares the attribute data of the *i*-th address read in step S105 with the state of the apparatus read in step S106 (step S107). Based on the comparison results, the address extracting section 14 determines whether the *i*-th address is to be transmitted (step S108). The processes in steps S107 and S108 are performed based on the state of the broadcast receiving apparatus 110 managed by the state managing section 13, such as the current date, television channel number, sound volume, and whether the apparatus is in standby mode or not. If it is determined in step S108 that the *i*-th address is to be transmitted, the address extracting section 14 adds the *i*-th address to addresses to be transmitted (target addresses) (step S109). Otherwise, the address extracting section 14 does not add the *i*-th address to the target addresses.

The address extracting section 14 then determines whether the *i*-th address is final data (step S110). If the *i*-th address is not final data (NO in step S110), the address extracting section 14 adds 1 to the variable *i* (step S111), and goes to step S105.

On the other hand, if the i-th address is final data (YES in step S110), the address extracting section 14 outputs the target addresses to the transmitting/receiving section 15 (step S112). Then, the transmitting/receiving section 15 uses the short-distance wireless network 30 to transmit the target addresses supplied by the address extracting section 14 to the information terminal 120 (step S113). The broadcast receiving apparatus 110 then goes to step S101. With this, the processes of steps S101 through S113 are repeated.

In the flowchart of FIG. 5, the address extracting section 14 processes n addresses in descending order. Alternatively, the addresses can be processed in another order (such as descending order or random order).

As shown in FIG. 6, the information terminal 120 first determines whether the addresses have been received from the broadcast receiving apparatus 110 via the short-distance wireless network 30 (step S151). If the addresses have been received, the information terminal 120 goes to step S152, and otherwise goes to step S154. In step S152, the transmitting/receiving section 21 outputs the received addresses to the address display section 22. The address display section 22 then immediately displays the addresses output from the transmitting/receiving section 21 on the screen of the information terminal 120 (step S153). If it is determined in step S151 that the addresses have not been received, the information terminal 120 continues to display the screen displayed in the previous step S153.

The user of the information terminal 120 uses the address selecting section 23 to select one desired address from the addresses displayed on the screen. The address selecting section 23 then determines whether an address has been selected by the user (step S154). If an address has been selected, the information terminal 120 goes to step S155, and otherwise goes to step S151.

If an address has been selected, the address selecting section 23 outputs the selected address to the information retrieving section 24 (step S155). The information retrieving section 24 then accesses the Web server 42 specified by the address selected by the address selecting section 23 to retrieve information specified by the address from the Web server 42 (step S156). The information retrieving section 24 then outputs the information retrieved from the Web server 42 to the information display section 25 (step S157). The information display section 25 displays the information supplied from the information retrieving section 24 on the screen of the information terminal 120 (step S158). The information terminal 120 then goes to step S151. With this, the processes of steps S151 through S158 are repeated.

In order to eliminate the inconvenience of selecting an address by the user, when only a single address is displayed in step S153, the information terminal 120 may automatically select that address in step S154 irrespectively of selection by the user, and then go to step S155.

As described above, in the information access system according to the present embodiment, the broadcast receiving apparatus stores addresses and their attribute data included in the received broadcast and, based on the state of the apparatus and the stored attribute data, extracts at least one address to be transmitted from the stored addresses, and then transmits the extracted address to the information terminal. The information terminal, on the other hand, uses the address transmitted from the broadcast receiving apparatus to retrieve information, and then displays the retrieved information on the screen. Thus, based on the state of the apparatus and the stored attribute data, the broadcast receiving apparatus can extract only the address(es) required for the information terminal for transmission. With this, it is possible to prevent the many addresses included in broadcast data from being provided as they are to the information terminal. This makes it easy to perform address selection and display at the information terminal, thereby enabling a user to access desired information by using the information terminal with just a few number of operations.

Furthermore, the broadcast receiving apparatus may receive a television broadcast including addresses and their attribute data, and the addresses included in the television broadcast may be addresses for accessing information associated with the broadcast. Also in this case, the broadcast receiving apparatus extracts only the address(es) required for the information terminal for transmission. Therefore, the user can access desired information by using the information terminal with just a few number of operations.

Still further, the information terminal immediately displays the addresses transmitted from the broadcast receiving apparatus. Therefore, even if the addresses are successively transmitted from the broadcast receiving apparatus to the information terminal, the user can select an address from among addresses most recently provided, and then access information by using the selected address.

### (Second embodiment)

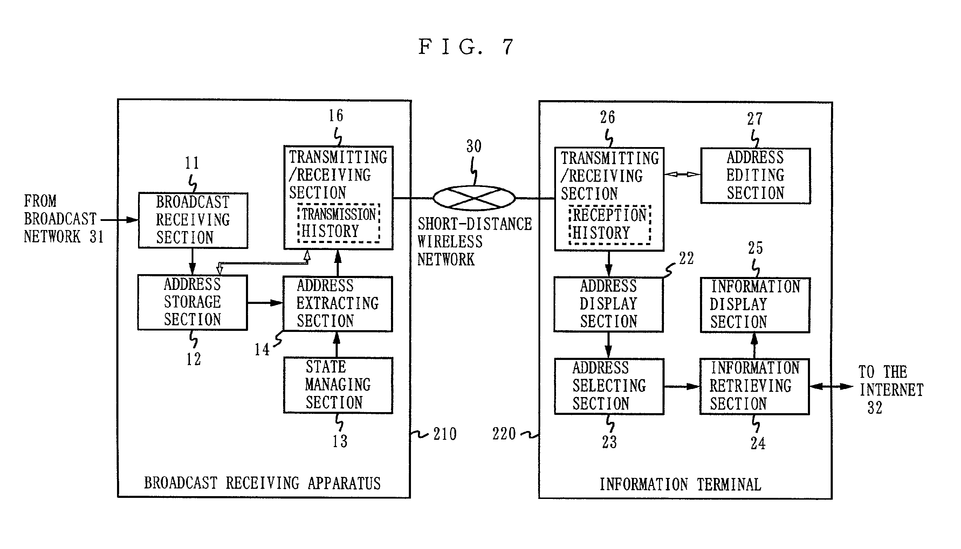

FIG. 7 is a block diagram illustrating the configuration of the information access system according to the second embodiment of the present invention. A broadcast receiving apparatus 210 and an information terminal 220 illustrated in FIG. 7 correspond to the broadcast receiving apparatus 10 and the information terminal 20 illustrated in FIG. 1, respectively. The broadcast receiving apparatus 210 includes the broadcast receiving section 11, the address storage section 12, the state managing section 13, the address extracting section 14, and a transmitting/receiving section 16. The information terminal 220 includes a transmitting/receiving section 26, the address display section 22, the address selecting section 23, the information retrieving section 24, the information display section 25, and an address editing section 27. The information access system according to the second embodiment is different from that according to the first embodiment in that update information associated with addresses is transmitted and that the addresses and the attribute data can be edited. The components in the second embodiments similar to those in the first embodiment are provided with the same reference numbers, and are not described herein.

First, transmission of update information associated with addresses is described below. Also in the second embodiment, as with the first embodiment, the broadcast receiving apparatus 210 receives addresses and their attribute data, and the address storage section 12 stores the received addresses and attribute data. The addresses received by the broadcast receiving apparatus 210 and the data stored in the address storage section 12 are exemplarily illustrated in FIGS. 3A, 3B, and 4.

The transmitting/receiving sections 16 and 26 according to the second embodiment are different from the transmitting/receiving sections 15 and 21 according to the first embodiment in the following points. That is, the transmitting/receiving section 16 stores the addresses that have been transmitted to the information terminal 220 as transmission history. When transmitting addresses again, the transmitting/receiving section 16 does not send these addresses as they are, but sends information indicative of a difference between addresses to be transmitted this time and the addresses that have been transmitted and stored in the transmission history (such information is hereinafter referred to as update information). The transmitting/receiving section 26 stores the addresses that have been received from the broadcast receiving apparatus 210 as reception history. When receiving addresses again, the transmitting/receiving section 26 uses the received update information to update the reception history and, based on the updated reception history, outputs the addresses currently received to the address display section 22.

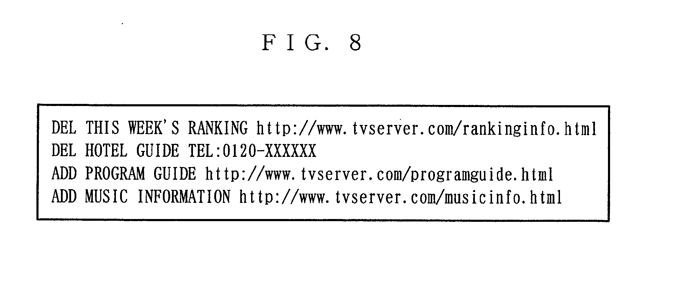

FIG. 8 is an illustration showing an example of the update information transmitted from the broadcast receiving apparatus 210 to the information terminal 220. The update information illustrated in FIG. 8 is transmitted in a case where addresses shown in first through third rows (first through third addresses) have been transmitted, and the broadcast receiving apparatus 210 received a fifth address at 17:00, September 16, 2001.

The transmission history of the transmitting/receiving section 16 and the reception history of the transmitting/receiving section 26 respectively have stored the first through third addresses. Of these addresses, TTLs of the second and third addresses expire at 17:00, September 16, 2001. Therefore, the second and third addresses are excluded from the target addresses. On the other hand, the display rule of the fourth address is satisfied at 17:00. Therefore, the fourth address is added to the target addresses. Also, according to the attribute data of the newly received fifth address, the information specified by the fifth address is continued to be displayed until 18:00, the same day. Therefore, the fifth address is also added to the target addresses.

For the purpose of changing a state where the first through third addresses have been transmitted into a state where the first, fourth, and fifth addresses have been transmitted, the second and third addresses are deleted from the target addresses, while the fourth and fifth addresses are added thereto. To achieve this, such update information as illustrated in FIG. 8 is transmitted from the broadcast receiving apparatus 210 to the information terminal 220. In FIG. 8, a line starting with a character string DEL indicates that an address should be deleted from the reception history of the information terminal 220. A line starting with a character string ADD indicates that an address should be added to the reception history of the information terminal 220.

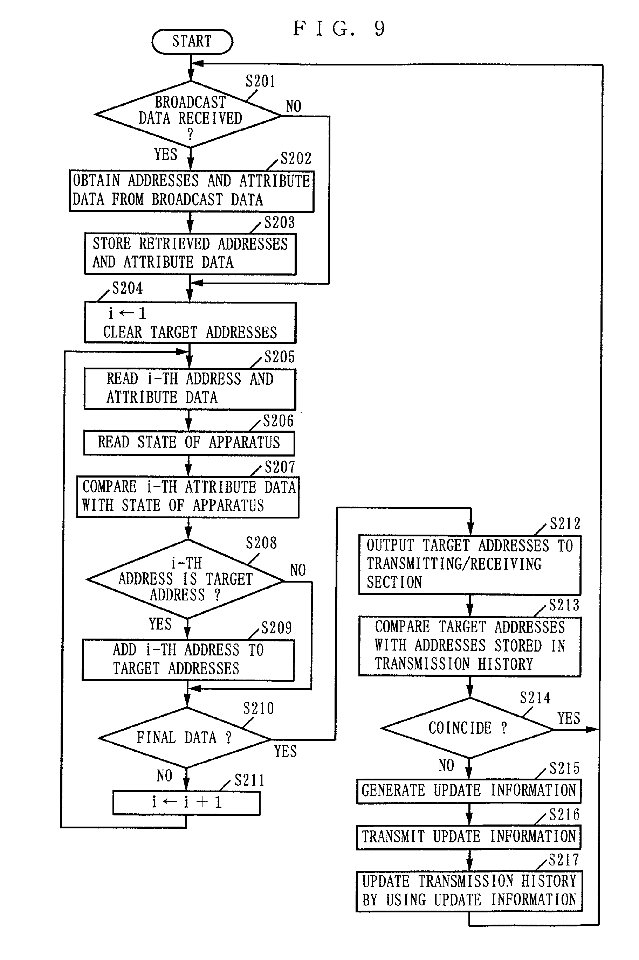

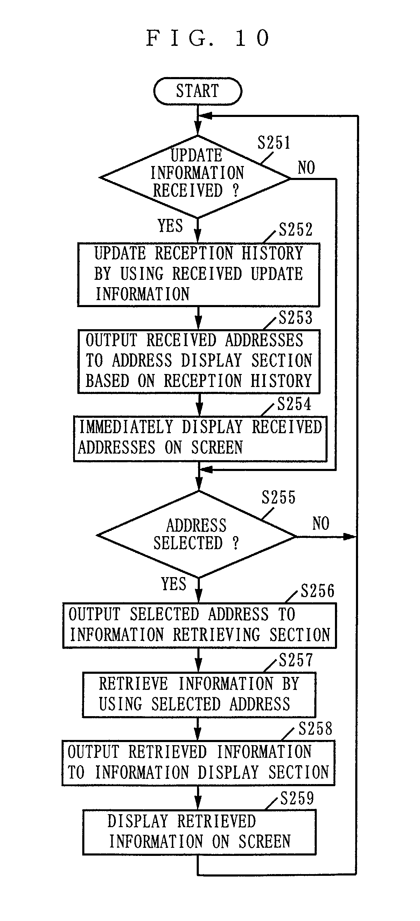

FIG. 9 is a flowchart showing a procedure performed by the broadcast receiving apparatus 210. As shown in FIG. 9, the broadcast receiving apparatus 210 repeatedly performs processes of steps S201 through S217. FIG. 10 is a flowchart showing a procedure performed by the information terminal 220. As shown in FIG. 10, the information terminal 220 repeatedly performs processes of steps S251 through S259. With reference to FIGS. 9 and 10, the operations of the broadcast receiving apparatus 210 and the information terminal 220 are described below.

Processes of steps S201 through S212 shown in FIG. 9 are the same as those of steps S101 and S112 shown in FIG. 5, respectively, and are therefore not described herein. When the address extracting section 14 outputs the target addresses in step S212, the transmitting/receiving section 16 compares the target addresses with the addresses already transmitted and stored in the transmission history (step S213). If these addresses coincide with each other, the broadcast receiving apparatus 210 goes to step S201, and otherwise goes to step S215 (step S214). If these addresses coincide with each other, the following process of transmitting update information is not performed.

If these addresses do not coincide with each other, the transmitting/receiving section 16 finds a difference between the target addresses and the addresses already transmitted and stored in the transmission history to generate update information (step S215). The transmitting/receiving section 16 then uses the short-distance wireless network 30 to transmit the generated update information to the information terminal 220 (step S216). With the generated update information, the transmitting/receiving section 16 then updates the transmission history (step S217). The broadcast receiving apparatus 210 then goes to step S201. With this, the processes of step S201 through S217 are repeated.

Processes of steps S254 through S259 shown in FIG. 10 are the same as those of steps S153 through S158 shown in FIG. 6, respectively, and are therefore not described herein. The information terminal 220 determines whether update information has been received from the broadcast receiving apparatus 210 via the short-distance wireless network 30 (step S251). If update information has been received, the procedure goes to step S252, and otherwise goes to step S254.

If update information has been received, the transmitting/receiving section 26 uses the received update information to update the reception history (step S252). The transmitting/receiving section 26 then finds any addresses that have been received at this point based on the updated reception history for output to the information address display section (step S253). The address display section 22 immediately displays the addresses output from the transmitting/receiving section 21 on the screen of the information terminal 220 (step S254). If addresses have not been received in step S251, the information terminal 220 continues to display the screen displayed in the previous step S254. In steps S255 and thereafter, the information terminal 220 operates in a manner similar to that of the information terminal 120 according to the first embodiment.

As with the first embodiment, when only a single address is displayed in step S254, the information terminal 220 may automatically select that address in step S255 irrespectively of selection by the user, and then go to step S256.

Also, the update information is not restricted to be of the format as illustrated in FIG. 8, but may be of any format representing the updated addresses. For example, each address may be assigned a number capable of uniquely identifying that address and, in the update information, that number is used to designate an address to be deleted.

Furthermore, when part of data included in the address that contains information, such as the title and icon of the address, is to changed, the broadcast receiving apparatus 210 may transmit only that part to be changed or the entire address.

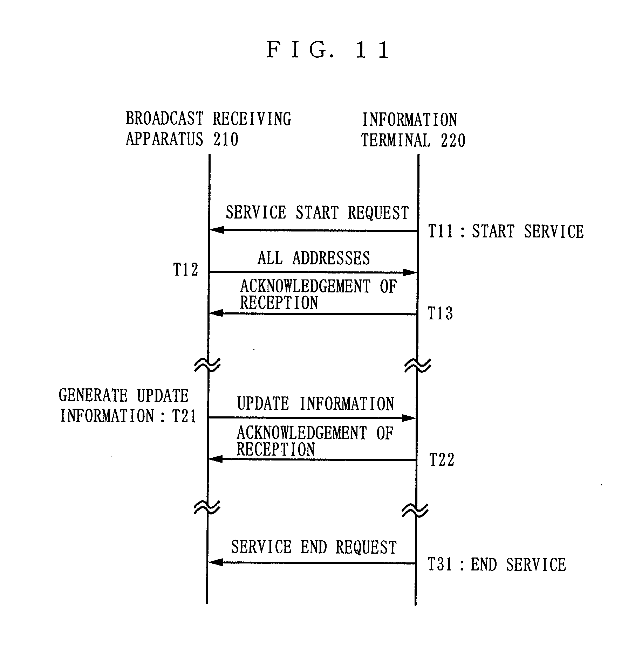

The broadcast receiving apparatus 210 and the information terminal 220 may perform the following process for only a predetermined period of time to carry out transmission and reception of the addresses therebetween based on the update information. FIG. 11 is a sequence chart showing how data is received and transmitted between the broadcast receiving apparatus 210 and the information terminal 220. This sequence chart illustrates three stages: starting, providing, and ending of an address transmission service based on the update information. In FIG. 11, two vertical lines each represent a time axis indicating that time passes from top to bottom of FIG. 11 in the broadcast receiving apparatus 210 and the information terminal 220. Horizontal arrows each represent data transmitted or received between the broadcast receiving apparatus 210 and the information terminal 220. Double wavy lines on the time axes represent that an arbitrary length of time has elapsed.

At the service start stage, the information terminal 220 prepares for receiving addresses, and then transmits, at time T11, a service start request to the broadcast receiving apparatus 210. The information terminal 220 transmits such a service start request only once at the start of the service. In response to the received service start request, the broadcast receiving apparatus 210 transmits, at time T12, all addresses extracted by the address extracting section 14. Upon normally receiving the addresses, the information terminal 220 acknowledges, at time T13, receipt of the addresses. The received addresses are immediately displayed on the screen of the information terminal 220.

Then, after an arbitrary length of time has elapsed, assume herein that the addresses extracted by the address extracting section 14 are different from those already transmitted. The broadcast receiving apparatus 210 then transmits, at time T21, update information indicating a difference between the addresses to be transmitted this time and the addresses that have been already transmitted. Upon receipt of the update information, the information terminal 220 acknowledges, at time T22, receipt of the update information. The received update information is used by the information terminal 220 to find the received addresses. With this update information, the addresses being displayed on the screen of the information terminal 220 is immediately updated to the latest. The broadcast receiving apparatus 210 transmits update information every time the addresses extracted by the address extracting section 14 are different from those already transmitted.

Then, after an arbitrary length of time has further elapsed, assume herein that the user of the information terminal 220 issues an instruction for ending the address transmission service based on update information. The information terminal 220 then transmits, at time T31, a service end request. Upon receipt of the service end request, the broadcast receiving apparatus 210 ends transmission of update information. That is, the broadcast receiving apparatus 210 does not transmit any update information after time T31 has elapsed, even if the address extracting section 14 extracts an address that is not one of the addresses already transmitted.

A function of editing addresses, which is another feature of the information access system according to the second embodiment, is described below. In the second embodiment, the transmitting/receiving section 16 is structured so as to access data stored in the address storage section 12 (refer to a hollow double-headed arrow in FIG. 7). In accordance with an instruction from the user, the address editing section 27 uses the transmitting/receiving sections 16 and 26 to access the address storage section 12 via the short-distance wireless network 30, thereby editing the address and the attribute data stored in the address storage section 12. The user uses the information terminal 220 to remotely perform operations, such as adding, deleting, and changing of the address and the attribute data stored in the address storage section 12. With this, for example, the user can add a desired address to the target addresses, delete an unwanted address from the target addresses, change the display rule associated with the address, and change the priority of the address. More specifically, consider a case where the information terminal 220 is set so as to put the cursor first on the address of the highest priority at the time of selection. In this case, by changing the priorities of the addresses, the user can control the information terminal 220 so that the cursor is put first on a desired address.

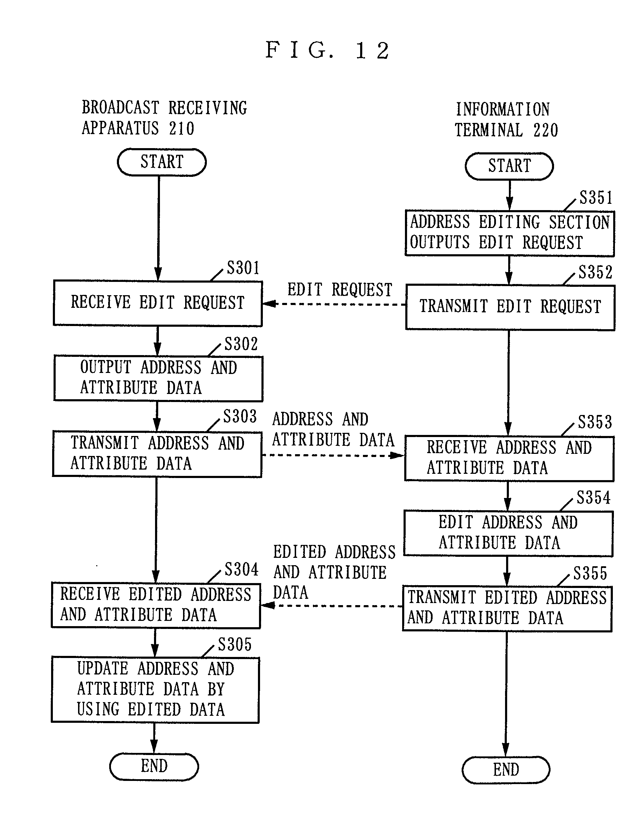

FIG. 12 is a flowchart showing a process of editing data stored in the address storage section 12 by using the address editing section 27. In FIG. 12, the broadcast receiving apparatus 210 performs processes of steps S301 through S305, while the information terminal 220 performs processes of steps S351 through S355.

The user of the information terminal 220 issues an instruction for editing at least one address to the address editing section 27. In accordance with the instruction from the user, the address editing section 27 then outputs an edit request that designates the address to be edited (step S351). The transmitting/receiving section 26 then transmits the edit request supplied by the address editing section 27 to the broadcast receiving apparatus 210 (step S352).

The broadcast receiving apparatus 210 then receives the edit request transmitted from the information terminal 220 (step S301). Upon receipt of the edit request, the transmitting/receiving section 16 reads the address designated to be edited and its attribute data from the address storage section 12 (step S302), and then transmits the read data to the information terminal 220 (step S303).

In the information terminal 220, the transmitting/receiving section 26 receives the address to be edited and its attribute data, and then outputs them to the address editing section 27 (step S353). The address editing section 27 causes the address to be edited and attribute data received from the broadcast receiving apparatus 210 to be displayed on the screen of the information terminal 220 in, for example, the table format illustrated in FIG. 4. The user views the screen of the information terminal 220 to edit the address and the attribute data. After the user ends editing, the address editing section 27 outputs the edited address and attribute data to the transmitting/receiving section 26 (step S354). The transmitting/receiving section 26 then transmits the edited address and attribute data to the broadcast receiving apparatus 210 (step S355). With this, the information terminal 220 ends the address editing process.

In the broadcast receiving apparatus 210, the transmitting/receiving section 16 receives the edited address and attribute data for output to the address storage section 12 (step S304). The address storage section 12 uses the edited address and attribute data supplied by the transmitting/receiving section 16 to update the stored addresses and attribute data (step S305). At this time, the address storage section 12 may overwrite the stored data with the edited data, or may add the edited data to the stored data. With this, the broadcast receiving apparatus 210 ends the address editing process.

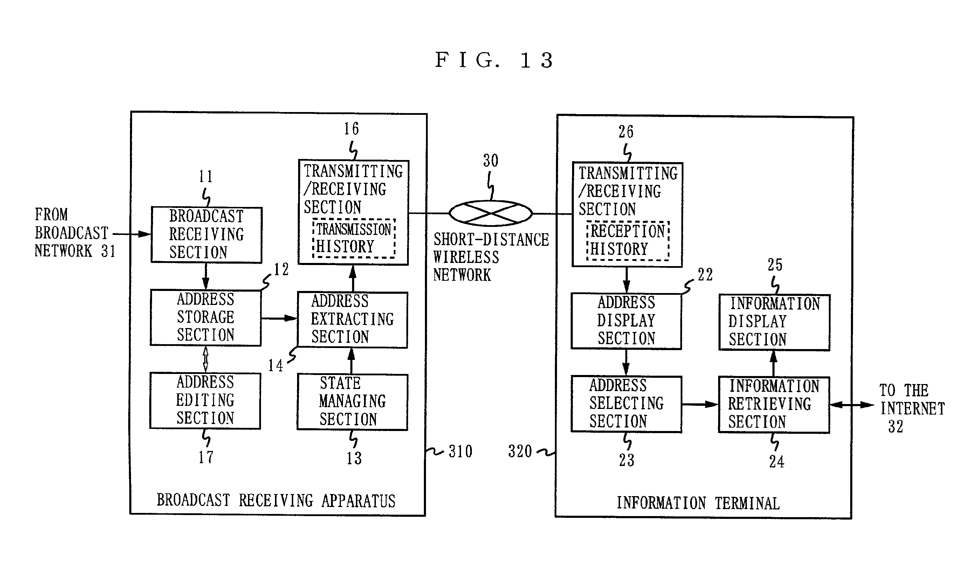

In the system illustrated in FIG. 7, the address editing section is provided in the information terminal. Alternatively, the address editing section can be provided in the broadcast receiving apparatus. FIG. 13 is a block diagram illustrating the configuration of an information access system according to an exemplary modification of the second embodiment of the present invention. A broadcast receiving apparatus 310 and an information terminal 320 illustrated in FIG. 13 correspond to the broadcast receiving apparatus 10 and the information terminal 20 illustrated in FIG. 1, respectively. In this system, an address editing section 17 is provided in the broadcast receiving apparatus 310. In accordance with an instruction from the user, the address editing section 17 edits an address and attribute data. The user uses the broadcast receiving apparatus 310 to make an addition, deletion, and change of an address and attribute data stored in the address storage section 12. In the system illustrated in FIG. 13, since the address editing section 17 is provided in the broadcast receiving apparatus 310, communications for editing an address and attribute data are not required.

As described above, in the information access system according to the second embodiment, as with the first embodiment, the broadcast receiving apparatus extracts part of the broadcasted addresses to transmit update information associated with the addresses to the information terminal. In other words, the broadcast receiving apparatus transmits the update information only when the addresses to be transmitted this time are different from those already transmitted. Therefore, when the addresses to be transmitted are not changed from those already transmitted, no data is transmitted. Thus, in addition to an effect of the first embodiment, an effect of improving communications efficiency can be achieved.

Also, in the second embodiment, the information terminal (or the broadcast receiving apparatus) includes an address editing section for editing the address and attribute data stored in the broadcast receiving apparatus. With this, the user can use the information terminal (or the broadcast receiving apparatus) to change address extracting condition at the broadcast receiving apparatus, thereby freely controlling the contents of the addresses to be provided to the information terminal or a scheme of providing the addresses. For example, the user can extend the expiration date of an address, transmit an address for only a specific period of time, put the cursor first on a predetermined address at the time of address selection, or receive a specific address from the broadcast receiving apparatus.

As described above, the information access system according to the second embodiment is different from that according to the first embodiment in two features: a feature of transmitting update information associated with the addresses and a feature of an address editing function. However, these two different features can be applied independently to the system of the first embodiment. That is, it is possible to construct two other different types of information access systems, one only including one of the two features and the other including only the other feature.

Furthermore, the broadcast receiving apparatus and the information terminal according to each embodiment of the present invention can be constructed by a CPU and a program incorporated in each of the broadcast receiving apparatus and the information terminal. For example, a CPU incorporated in the broadcast receiving apparatus 110 executes a program that operates according to the flowchart shown in FIG. 5, thereby achieving the features of the broadcast receiving apparatus 110. Alternatively, a CPU incorporated in the information terminal 220 executes a program that operates according to the flowchart shown in FIG. 10, thereby achieving the features of the information terminal 220. This is applicable to other broadcast receiving apparatuses and information terminals according to the embodiments of the present invention.

While the invention has been described in detail, the foregoing description is in all aspects illustrative and not restrictive. It is understood that numerous other modifications and variations can be devised without departing from the scope of the invention.

## Claims

1. An information access system having a broadcast receiving apparatus and an information terminal that are communicably connected with each other,
the broadcast receiving apparatus (10, 110, 210, 310) comprising:
broadcast receiving means (11) for receiving a broadcast including one or more addresses to be used in the information terminal and attribute information of the addresses;
address storage means (12) for storing the addresses and the attribute information included in the broadcast received by the broadcast receiving means;
state managing means (13) for managing a state of the broadcast receiving apparatus;
address extracting means (14) for extracting one or more addresses to be transmitted from the addresses stored in the address storage means, based on the state managed by state managing means and the attribute information stored in the address storage means; and
address transmitting means (15, 16) for transmitting the addresses extracted by the address extracting means to the information terminal, and
the information terminal (20, 120, 220, 320) comprising:
address receiving means (21, 26) for receiving the addresses transmitted from the broadcast receiving apparatus;
address displaying means (22) for displaying the addresses received by the address receiving means on a screen;
address selecting means (23) for selecting an address from the addresses displayed by the address displaying means;
information retrieving means (24) for retrieving information using the address selected by the address selecting means; and
information displaying means (25) for displaying the information retrieved by the information retrieving means on the screen.

2. The information access system according to claim 1, wherein
the broadcast receiving apparatus (310) further includes address editing means (17) for editing any of the addresses and the attribute information stored in the address storage means.

3. The information access system according to claim 1, wherein
the information terminal (220) further includes terminal-side address editing means (27) for editing any of the addresses and the attribute information stored in the address storage means by using a function of communicating with the broadcast receiving apparatus.

4. The information access system according to claim 1, wherein
the address transmitting means (16) stores a transmission history indicative of the addresses that have been transmitted, finds update information based on the transmission history and the addresses extracted by the address extracting means, and transmits the found update information to the information terminal, and
the address receiving means (26) stores a reception history indicative of the addresses that have been received, and finds the addresses transmitted from the broadcast receiving apparatus based on the reception history and the update information transmitted from the broadcast receiving apparatus.

5. The information access system according to claim 1, wherein
the broadcast receiving means receives a television broadcast including one or more addresses (11) to be used in the information terminal and attribute information of the addresses.

6. The information access system according to claim 5, wherein
the addresses included in the television broadcast received in the broadcast receiving means are addresses for accessing information associated with the television broadcast.

7. The information access system according to claim 1, wherein
the address displaying means (22) immediately displays the addresses received by the address receiving means.

8. The information access system according to claim 1, wherein
the broadcast receiving apparatus (10, 110, 210, 310) and the information terminal (20, 120, 220, 320) are communicably connected to each other via a short-distance wireless communications (30).

9. A broadcast receiving apparatus (10, 110, 210, 310) that provides an address to an information terminal communicably connected thereto, comprising:
broadcast receiving means (11) for receiving a broadcast including one or more addresses to be used in the information terminal and attribute information of the addresses;
address storage means (12) for storing the addresses and the attribute information included in the broadcast received by the broadcast receiving means;
state managing means (13) for managing a state of the broadcast receiving apparatus;
address extracting means (14) for extracting one or more addresses to be transmitted from the addresses stored in the address storage means, based on the state of the state managing means and the attribute information stored in the address storage means; and
address transmitting means (15, 16) for transmitting the addresses extracted by the address extracting means to the information terminal.

10. An information terminal (320) that receives an address from a broadcast receiving apparatus (10, 110, 310) which is communicably connected thereto and which stores one or more addresses and attribute information of the addresses included in a received broadcast, the information terminal comprising:
address receiving means (21, 26) for receiving one or more addresses transmitted from the broadcast receiving apparatus;
address displaying means (22) for displaying the addresses received by the address receiving means on a screen;
address selecting means (23) for selecting an address from the addresses displayed by the address displaying means;
information retrieving means (24) for retrieving information using the address selected by the address selecting means;
information displaying means (25) for displaying the information retrieved by the information retrieving means on the screen; and
terminal-side address editing means (27) for editing any of the addresses and the attribute information stored in the broadcast receiving apparatus using a function of communicating with the broadcast receiving apparatus, wherein
the broadcast receiving apparatus transmits the addresses extracted from the stored addresses based on a state of the broadcast receiving apparatus and the attribute information.

11. An information accessing method using a broadcast receiving apparatus and an information terminal that are communicably connected with each other, the method comprising:
steps performed by the broadcast receiving apparatus of:
receiving a broadcast including one or more addresses to be used in the information terminal and attribute information of the addresses;
storing the addresses and the attribute information included in the received broadcast;
managing a state of the broadcast receiving apparatus;
extracting one or more addresses from the stored addresses based on the managed state and the stored attribute information; and
transmitting the extracted addresses to the information terminal, and
steps performed by the information terminal of:
receiving the addresses transmitted from the broadcast receiving apparatus;
displaying the received addresses on a screen;
selecting an address from the displayed addresses;
retrieving information using the selected address; and
displaying the retrieved information on the screen.

12. A program to be executed by a broadcast receiving apparatus that provides an address to an information terminal communicably connected thereto, comprising the steps of:
receiving a broadcast including one or more addresses to be used in the information terminal and attribute information of the addresses;
storing the addresses and the attribute information included in the received broadcast;
managing a state of the broadcast receiving apparatus;
extracting one or more addresses from the stored addresses based on the managed state and the stored attribute information; and
transmitting the extracted addresses to the information terminal.

13. A program to be executed by an information terminal that receives addresses from a broadcast receiving apparatus which is communicably connected thereto and which stores one or more addresses and attribute information of the addresses included in a received broadcast, the program comprising the steps of:
receiving one or more addresses transmitted from the broadcast receiving apparatus;
displaying the received addresses on a screen;
selecting an address from the displayed addresses;
retrieving information using the selected address;
displaying the retrieved information on the screen; and
editing any of the addresses and the attribute information stored in the broadcast receiving apparatus by using a function of communicating with the broadcast receiving apparatus, wherein
the broadcast receiving apparatus transmits the addresses extracted from the stored addresses based on a state of the broadcast receiving apparatus and the attribute information.
